# EUROPÄISCHE PATENTSCHRIFT

(11) **EP 0 797 816 B1**
(45) Veröffentlichungstag und Bekanntmachung des Hinweises auf die Patenterteilung: **29.08.2001**
(21) Anmeldenummer: 95934633.9
(22) Anmeldetag: 22.09.1995
(51) Int. Cl.: G08C 15/12, H04J 3/10

(54) **SYSTEM MIT MUSIKINSTRUMENTEN UND/ODER BÜHNENMIKROPHONEN, EINEM MISCHPULT SOWIE EINER VERBINDUNG DAZWISCHEN**
SYSTEM WITH MUSICAL INSTRUMENTS AND/OR STAGE MICROPHONES, A MIXING DESK AND A CONNECTION THEREBETWEEN
SYSTEME AVEC INSTRUMENTS DE MUSIQUE ET/OU MICROPHONES DE SCENE, UNE TABLE DE MIXAGE ET UNE LIAISON ENTRE CEUX-CI

(30) Priorität: 10.10.1994 DE 4436188
(43) Veröffentlichungstag der Anmeldung: 01.10.1997
(73) Patentinhaber: Brunke, Marc, 80636 München (DE)
(72) Erfinder: Brunke, Marc, 80636 München (DE)
(74) Vertreter: Söllner, Udo
(86) Internationale Anmeldenummer: EP9503766
(87) Internationale Veröffentlichungsnummer: WO9611456

(56) Entgegenhaltungen:
- DE-B- 1 046 124
- FR-A- 2 299 672
- FR-A- 2 437 038
- US-A- 3 340 366
- US-A- 3 665 439
- US-A- 4 473 901

## Beschreibung

Die vorliegende Erfindung betrifft ein system mit musikinstrumenten und/oder bühnenmikrophonen, einem mischpult sowie einer verbindung dazwischen

In vielen Bereichen der Elektrotechnik bzw. Elektronik ist es erforderlich, Signale oder Signalfolgen, die von einer Signalquelle stammen, an einem Ort weiterzuverarbeiten, der entfernt von der Signalquelle ist.

Ein Beispiel hierfür ist die entfernt von der Signalverarbeitungsvorrichtung stattfindende Erfassung von Meßwerten jeder Art, oder der Datenaustausch zwischen entfernt voneinander aufgestellten Datenverarbeitungsvorrichtungen oder beispielsweise auch die leitungsgebundene terrestrische Übertragung von Daten zwischen Geräten aus dem Bereich der Kommunikationselektronik.

Eine große Bedeutung kommt der Signalübertragung aber auch im Bereich der ganz allgemein zu nennenden Musiktechnik zu, wo es oftmals erforderlich ist, die von einem oder mehreren Musikinstrumenten erzeugten Tonfolgen bzw. auch die von Mikrophonen aufgenommene menschliche Stimme zu einer Signalverarbeitungsvorrichtung zu übertragen, beispielsweise einem Mischpult im Tonstudio.

Im Falle einer Band oder eines Orchesters müssen daher die von der Vielzahl der Musikinstrumente stammenden Einzelsignale oder Signalfolgen, da diese regelmäßig noch elektronisch verändert oder verstärkt werden müssen, dem Mischpult zugeführt werden, das oft, so beispielsweise bei einem Liveauftritt, fünfzig und mehr Meter von den einzelnen Signalquellen, also den Musikinstrumenten oder den Bühnenmikrophonen, entfernt ist.

Hierzu ist es bekannt, die Musikinstrumente bzw. die Mikrophone mit dem Mischpult über ein Kabel zu verbinden, das beispielsweise zwölf ein- oder paarweise abgeschirmte Leitungen besitzt. Jede einzelne Signalleitung ist dann einem Musikinstrument oder beispielsweise einem Bühnenmikrophon zugeordnet. Wenn nun eine Vielzahl unterschiedlicher Musikinstrumente zum Einsatz kommt, kann der Fall eintreten, daß sogar mehrere dieser jeweils zwölfadrigen Kabel eingesetzt werden müssen. Diese Kabel sind in Form großer und schwerer Kabeltrommeln bekannt, die eine Kabellänge von beispielsweise fünfundzwanzig Metern pro Kabeltrommel aufweisen und an den Enden jeweils Stecker oder Buchsen besitzen. Aufgrund der zur Vermeidung von übermäßigen Störungen notwendigen jeweils einzelnen Abschirmungen der einzelnen Leitungen weist das Kabel einen Durchmesser von mehreren Zentimetern auf.

Im Falle eines Liveauftritts und eines damit zusammenhängenden Zeitdrucks wird dieses Kabel kurz vor dem Auftritt der Musikgruppe abgerollt und eine entsprechende Verbindung zwischen den einzelnen Musikinstrumenten und den Bühnenmikrophonen und dem Mischpult hergestellt. Auch vom Mischpult zu beispielsweise einer ersten Verstärkungsanlage werden derartige Kabel eingesetzt. Es liegt in der Natur der Dinge, daß eine über ein solches Kabel gebildete Leitungsanordnung in hohem Maße störanfällig ist. In vielen Fällen derartiger Auftritte wird mit großen Ausgangsleistungen gearbeitet, für deren Schaffung große Stromstärken erforderlich sind, die zu entsprechend starken elektromagnetischen Störschwingungen führen.

Wird beispielsweise dieses Kabel hinter Lautsprecherboxen verlegt, die mit starken Ablenkmagneten versehen sind, so sind die Klangqualität verschlechternde Störungseinflüsse auf das Kabel unausweichlich. Gelegentlich kommt es auch zu einzelnen Brüchen der einadrigen Leitungen, so daß der davon betroffene Tonkanal überhaupt nicht mehr übertragen werden kann. Wenn die auf der Kabeltrommel aufgewickelte Länge des Kabels größer ist, als die zu überbrückende Wegstrecke, wird oftmals das Kabel nicht vollständig abgewickelt, so daß dadurch eine Drosselspule mit erheblichem Wechselstromwiderstand entsteht. Auch kommt es aufgrund des engen Aneinanderliegens der einzelnen einadrigen Leitungen im Kabel zu einem Übersprechen, so daß die Klangqualität erheblich vermindert wird.

Zudem stellen sich aufgrund der langen Leitungen und des damit verbundenen Leitungswiderstandes erhebliche unvermeidbare Leitungsverluste ein.

Aus der US-A-4 473 901 ist eine Schaltung zur Übertragung von analogen Audiosignalen über einen Lichtwellenleiter bekannt geworden. Diese Schaltung ist so ausgebildet, daß mit ihr analoge Signale eines Unterwasserortungsgerätes zu Simulationszwecken auf einen im Abstand zum Unterwasserortungsgerät angeordneten Sonarempfänger übertragen werden können.

Aus der US-A-3 665 439 ist ein Multiplexverfahren bekannt geworden, welches in diesem Fall als System zur Überwachung des Betriebes von Flugzeugen eingesetzt wird und zwar zur Übertragung von Signalen, die von einer Vielzahl von Meßfühlern stammen.

Der Erfindung liegt nun die Aufgabe zu Grunde, ein system zu schaffen, mit dem bei wesentlich einfacher zu handhabender Leitungsanordnung eine störungsfreie Übertragung von Signalen oder Signalfolgen in der Musiktechnik auch über große Wegstrecken ermöglicht ist.

Die Erfindung weist zur Lösung dieser Aufgabe die im Anspruch 1 angegebenen Merkmale auf. Vorteilhafte Verfahrensausgestaltungen sind in den weiteren Ansprüchen beschrieben.

Der vorliegenden Erfindung liegt der wesentliche Gedanke zu Grunde, daß sich die die Signalübertragung negativ beeinflussenden Rausch- und Störgeräusche, das Übersprechen sowie die unvermeidlichen Leitungsverluste, wie sie bei dem bekannten Kabel durch die sehr nahe beieinanderliegenden und langen Leitungen auftreten, einer zum Teil aufgewickelten Kabeltrommel entstehen können und durch elektromagnetische Störwellen auftreten, dadurch beseitigen lassen, wenn eine Übertragungsart zum Einsatz kommt, die unempfindlich gegen jede Art von elektromagnetischen Störeinflüssen ist.

Nach der Erfindung ist daher ein System, enthaltend Musikinstrumente und/oder Bühnenmikrophone als Signalquellen für Audiosignale, ein Mischpult und eine Verbindung zwischen den Signalquellen auf der einen Seite und dem Mischpult auf der anderen Seite vorgesehen, wobei diese Verbindung zur Übertragung der von den Musikinstrumenten erzeugten Tonfolgen und/oder von von den Mikrophonen aufgenommener menschlicher Stimme dient und wobei diese Verbindung enthält: eine Multiplexeinrichtung zur Abtastung der einzelnen Signalquellen, eine Einrichtung zur Erzeugung eines Taktsignals, eine Einrichtung zur Erzeugung und Modulation eines Synchronisierungssignals und eine Einrichtung zur Mischung dieser Signale zu einem Signalgemisch sowie eine Einrichtung zur Einkoppelung des Signalgemisches in einen Lichtwellenleiter.

Hierdurch wird in vorteilhafter Weise die eigentlich hauptverantwortliche Fehlerquelle für die Verfälschung der zu übertragenden Signale und/oder Signalfolgen, nämlich die Störungen durch die langen passiven Leitungen vermieden. Zudem wird hierdurch der Vorteil erreicht, daß anstelle der teuren Leitungsanordnung eine kostengünstige Leitungsanordnung einsetzbar ist.

Von ausgesprochen großem Vorteil ist es, anstelle der bekannten, mit vielen einzeln abgeschirmten Leitungen versehenen Kabel, die zu übertragenden Signale und/oder Signalfolgen mit der Aufbereitungsvorrichtung derart aufzubereiten, daß als Leitung ein Lichtwellenleiter eingesetzt werden kann. Gegenüber dem bekannten vieladrigen Kabel ist hierdurch der große Vorteil einer geringen Dämpfung erzielt, einer großen Übertragungsbandbreite, einer völligen Störunempfindlichkeit gegenüber elektromagnetischen Störfeldern, einer vollständigen Beseitigung der Gefahr des Übersprechens und schließlich der große Vorteil der sehr einfachen Handhabung einer derartigen auf einem Lichtwellenleiter basierenden Leitungsanordnung, da sie dadurch einen kleinen Kabeldurchmesser von beispielsweise im Bereich von 3 mm und ein geringes Gewicht besitzt und hierdurch sehr einfach handhabbar ist. Hierzu ist es lediglich erforderlich - da jetzt mehrere Eingänge gleichzeitig auf einer Leitung verschickt werden - die Eingänge hintereinander auf diese Übertragungsleitung zu geben, also ein Signalgemisch herzustellen.

Erfindungsgemäß ist hierzu vorgesehen, daß zusammen mit dem Signalgemisch, den Signalen und/oder Signalfolgen ein Taktsignal und ein Synchronisierungssignal übertragen wird. Hierbei sind unter dem Taktsignal und dem Synchronisierungssignal diejenigen Signale zu verstehen, die zu einer späteren Signaltrennung erforderlich sind.

Es ist dies deshalb von Vorteil, da nach der Übertragung die Signale und/oder Signalfolgen, die letztlich von verschiedenen Signalquellen stammen, zur Weiterverarbeitung wieder voneinander getrennt werden müssen, so daß das Ausgangssignal, beispielsweise das einer ersten Signalquelle entstammende Signal nach erfolgter Übertragung als dieser ersten Signalquelle entstammend ermittelt werden muß. Dies erfolgt derart, daß die Signaltrennung in einem der Signalbildung entsprechenden Takt erfolgt, wozu in vorteilhafter Weise auch das Synchronisierungssignal verwendet wird.

Eine Synchronisierung ist von Vorteil, da der Übertragungszyklus ständig wiederholt wird und demnach nach der Signalübertragung zur Weiterverarbeitung der jeweils einzelnen Signale und/oder Signalfolgen ein entsprechender Dekodierzyklus folgt, der synchron und im Takt mit dem vor der Übertragung durchgeführten Kodierzyklus erfolgt, mit dem die einzelnen Signale und/oder Signalfolgen mit dem Taktsignal und/oder dem Synchronisierungssignal zu einem Signalgemisch kodiert wurden.

In vorteilhafter Weise ist hierzu vorgesehen, daß zwischen den von den mindestens zwei Signalquellen stammenden Signalen und/oder Signalfolgen ein Trennsignal übertragen wird derart, daß ein Übersprechen der Signale und/oder Signalfolgen vermieden wird. Es bedeutet dies mit anderen Worten, daß zwischen zwei von zwei unterschiedlichen Signalquellen stammenden Signalen und/oder Signalfolgen ein Trennsignal eingefügt wird, damit ein Übersprechen der von verschiedenen Signalquellen stammenden Signale und/oder Signalfolgen stark gedämpft wird, so daß auch beim nachfolgenden nach der Übertragung stattfindenden Dekodiervorgang eine eineindeutige Zuordnung der dekodierten Signale und/oder Signalfolgen möglich ist.

Hierzu ist auch in vorteilhafter Weise vorgesehen, daß die Signale und/oder Signalfolgen und das Taktsignal in einer sich von Synchronisierungssignal unterscheidenden Signalform übertragen werden.

Es ist dies deshalb von Vorteil, da hierdurch eine einfache und genaue Dekodierung des Gesamtsignalgemisches nach der Übertragung möglich ist, da sich das Synchronisierungssignal bezüglich seiner Signalform deutlich von der Signalform der Signale und/oder Signalfolgen und dem Taktsignal unterscheidet.

Erfindungsgemäß ist dabei vorgesehen, daß eine Abtastvorrichtung die Signalquellen in einem vorher bestimmbaren wiederholbaren Abtastzyklus zur Aufnahme eines Signals und/oder einer Signalfolge abtastet und diese an die Aufbereitungsvorrichtung weitergibt. Es bedeutet dies mit anderen Worten, daß eine Vielzahl einzelner Signalquellen über einen Multiplexer abgetastet wird, so daß auch ein kostengünstiges Verfahren geschaffen wird, da hierdurch eine einheitliche Aufbereitungsvorrichtung mit einer einheitlichen Kodierlogik zur Schaffung des aus Signalen und/oder Signalfolgen, dem Taktsignal und dem Synchronisierungssignal gebildeten Signalgemisches ausreicht.

Erfindungsgemäß kann dabei das zur Dekodierung nach der Übertragung vorgesehene Synchronisierungssignal zu Beginn und/oder am Ende eines jeden einzelnen oder eines Vielfachen eines jeden einzelnen Abtastzykluses oder zu einem beliebigen und bestimmbaren Zeitpunkt übertragen werden. Hierdurch ist in vorteilhafter Weise eine eineindeutige Zuordnung der Signale und/oder Signalfolgen an die jeweilige Signalquelle sichergestellt.

Es ist vorgesehen, daß das aus Signalen und/oder Signalfolgen, dem Taktsignal und dem Synchronisierungssignal gebildete Signalgemisch nach der Übertragung wieder in die den einzelnen Signalquellen entstammenden Signale und/oder Signalfolgen, das Taktsignal und das Synchronisierungssignal getrennt wird. Hierdurch ist erreicht, daß nach der Übertragung die Signale und/oder Signalfolgen der einzelnen Signalquellen getrennt voneinander weiterverarbeitet werden können, beispielsweise mit zusätzlichen Signalen gemischt oder elektronisch nachbearbeitet werden können. Wie bereits erwähnt, wird hierzu in vorteilhafter Weise das Taktsignal und das Synchronisierungssignal verwendet, wobei ersteres insbesondere dafür sorgt, daß nach der Übertragung eine der Signalmischung vor der Übertragung zeitmäßig entsprechende Trennung des übertragenen Signalgemisches in einzelne Signale bzw. Signalfolgen geschehen kann, wobei hierzu unterstützend das Synchronisierungssignal verwendet wird derart, daß empfängerseitig eine exakte Zuordnung der Kanäle erfolgen kann.

Hierzu ist gemäß der Erfindung vorgesehen, daß die Trennung des Signalgemisches nach der Übertragung zunächst in das Synchronisierungssignal und einem Signalgemisch aus Signal und/oder Signalfolge plus Taktsignal erfolgt. Dieses Signalgemisch wird zur Trennung von Signal und/oder Signalfolge vom Taktsignal oder dem Synchronisierungssignal weiterverarbeitet. Es ist aber auch möglich, das Sychronisierungssignal dann im Signalgemisch zu belassen, wenn es sich bei der später erfolgenden Weiterverarbeitung der Tonsignale nicht störend auswirkt.

Es heißt dies mit anderen Worten, daß das übertragene Signalgemisch zunächst derart verarbeitet wird, daß das Synchronisierungssignal aus dem übertragenen Signalgemisch herausgefiltert wird, wobei dieses vor der Übertragung in vorteilhafter Weise in einer Signalform aufbereitet wurde, die nicht dem aus Signal und/oder Signalfolge plus Taktsignal entsprechenden Signalgemisch entspricht und dann dieses Signalgemisch derart verarbeitet wird, daß das Taktsignal und das eigentliche Signal bzw. die eigentliche Signalfolge, also z. B. ein Tonsignal, getrennt werden.

In Fortführung der Erfindung kann dabei das aus Signalen und/oder Signalfolgen, dem Taktsignal und Synchronisierungssignal gebildete Signalgemisch entweder rein analog oder rein digital übertragen werden, wobei aber auch eine Mischform möglich ist, derart, daß einzelne Bestandteile des Signalgemisches analog oder digital übertragen werden, während andere Bestandteile des Signalgemisches in hierzu umgekehrter Weise digital oder analog übertragen werden. So ist es beispielsweise möglich, die eigentlichen Signale und/oder Signalfolgen, also beispielsweise ein Tonsignal, rein analog zu übertragen, um mögliche bei der Digitalisierung auftretende Signalverfälschungen zu vermeiden, während das ohnehin nicht für die menschliche Wahrnehmung vorgesehene Taktsignal und das Synchronisierungssignal digital übertragen werden.

Hierzu kann die gesamte oder auch die bestandteilsweise Digitalisierung durch die Aufbereitungsvorrichtung ausgeführt werden.

Wie bereits vorstehend erwähnt, ist es besonders vorteilhaft, als Leitungsanordnung einen Lichtwellenleiter einzusetzen, in den das von der Aufbereitungsvorrichtung aufbereitete Signalgemisch über eine Leuchtdiode oder eine Laserdiode eingekoppelt wird derart, daß es nach der Übertragung von einem Fotoelement empfangen und der Trennung des Signalgemisches zugeführt wird.

Es heißt dies mit anderen Worten, daß bei der Verwendung eines Lichtwellenleiters ein einziges Kabel, also beispielsweise ein multimodaler Leiter eingesetzt wird, der einen ausgesprochen geringen Leitungsdurchmesser aufweist und somit zu einer ausgesprochen guten Handhabbarkeit einer diesen Leiter aufnehmenden Kabeltrommel führt, wobei zusätzlich der Einfluß elektromagnetischer Störfelder auf die Übertragung der Signale bzw. der Signalfolgen vermieden ist, die Signale äußert gering gedämpft übertragen werden, was dazu führt, daß große Übertragungsstrecken ohne zwischengeschaltete Verstärkung überbrückt werden können. Hierzu ist es lediglich erforderlich, eine schnell modulierbare Leuchtdiode oder eine entsprechend schnell modulierbare Laserdiode zu verwenden, über die dann das von der Aufbereitungsvorrichtung aufbereitete Signalgemisch in den multimodalen Lichtwellenleiter eingekoppelt wird. Empfängerseitig, d. h. auf der Seite nach der Übertragung des Signalgemisches wird das übertragene Signalgemisch von einem Fotoelement empfangen und der Trennung des Signalgemisches zugeführt.

Wenn es wünschenswert sein sollte, das Signalgemisch oder einzelne Bestandteile des Signalgemisches in digitalisierter Form zu übertragen, so kann die Aufbereitungsvorrichtung einen A/D - Wandler zur Bildung eines Signalgemisches oder Einzelsignale in digitalisierter Signalform aufweisen.

Schließlich ist vorgesehen, daß empfängerseitig, d. h. auf der Seite nach der Übertragung des Signalgemisches eine Vorrichtung zum Empfang und zur Trennung des Signalgemisches oder der einzelnen Signale vorgesehen ist, die funktionskomplementär zur Aufbereitungsvorrichtung ausgebildet ist. Es heißt dies mit anderen Worten, daß die empfängerseitig angeordnete Vorrichtung die von der Aufbereitungsvorrichtung zur Signalübertragung aufbereiteten Signale, also das Signalgemisch nach der Übertragung empfängt und in einzelne Signale oder Signalfolgen trennt. Für den Fall, daß das Signalgemisch vollständig oder bestandteilsweise in digitalisierter Form übertragen wird, kann die empfängerseitig angeordnete Vorrichtung einen D/A - Wandler zur Bildung eines analogen Signalgemisches oder einzelner Signale aufweisen. Es ist dies insbesondere deshalb von Vorteil, da damit auch bei der teilweise digitalen Übertragung eine einheitliche Vorrichtung zum Empfang und zur Trennung des Signalgemisches oder der Einzelsignale eingesetzt werden kann, da die digitalisierten Signale vorher dem D/A - Wandler zugeführt werden, so daß die vorher digital übertragenen Signale analog ausgewertet bzw. weiterverarbeitet werden.

Die Erfindung wird im folgenden anhand der Zeichnung näher erläutert. Diese zeigt in
Fig.1 das system schematisch anhand eines Blockdiagramms mit einem Lichtwellenleiter und
Fig. 2 mehrere Signalformen der mit dem system nach Fig. 1 übertragenen Signale.

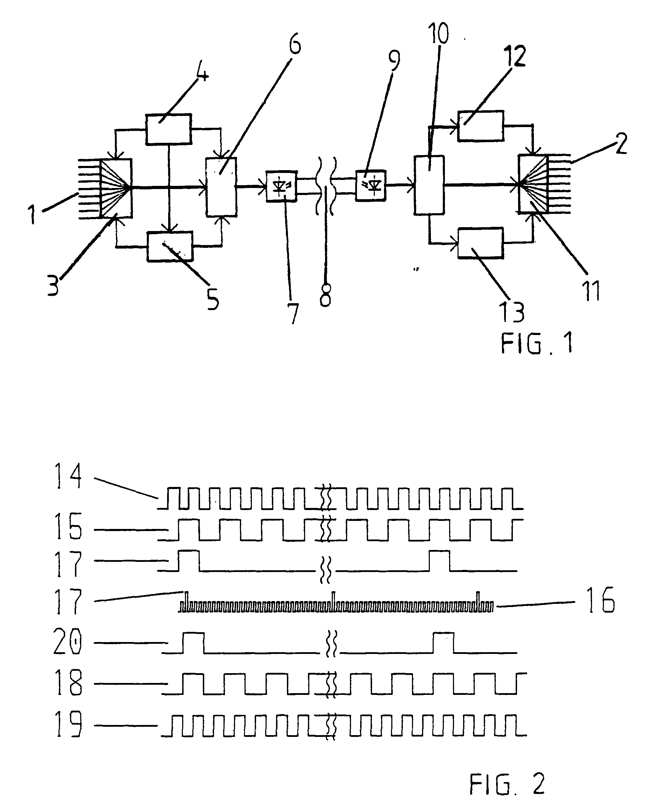

Wie bereits erwähnt ist in Fig. 1 das system schematisch anhand eines Blockdiagramms dargestellt, wobei als Leitungsanordnung ein Lichtwellenleiter, beispielsweise ein multimodaler Lichtwellenleiter eingesetzt wird.

Wie leicht auch Fig. 1 der Zeichnung ersichtlich, dient das system im dargestellten Ausführungsbeispiel der Übertragung von Signalen und/oder Signalfolgen, die von einer Vielzahl von Signalquellen stammen.

Hierzu zeigt Fig. 1 im Bereich der linken Zeichnungshälfte eine Vielzahl von Eingängen 1, welche die Vielzahl von Signalquellen darstellen. Obwohl im dargestellten Ausführungsbeispiel aus Gründen der zeichnerischen Vereinfachung nur neun Eingänge gezeichnet sind, ist die Zahl der Eingänge beliebig modifizierbar, so daß auch Signale oder Signalfolgen, die von vielen verschiedenen Musikinstrumenten und Mikrophonen kommen, mit dem Verfahren übertragen werden können. So ist es beispielsweise möglich, zweiunddreißig Eingänge 1 vorzusehen, über die zweiunddreißig Signalquellen bzw. deren Signale oder Signalfolgen abtastbar sind, so daß diese Signale oder Signalfolgen nach der Übertragung wieder als zweiunddreißig einzelne Signale oder Signalfolgen vorliegen, wobei dies schematisch in Fig. 1 anhand der Ausgänge 2 dargestellt ist.

Zur Bündelung der einzelnen Signale oder Signalfolgen ist eine Multiplexeinrichtung 3 vorgesehen, die über ein Taktsignal aus einem Taktgeber 4 angesteuert wird. Außer den eigentlichen Signalen oder Signalfolgen werden zur Rückwandlung an der in Fig. 1 schematisch rechts dargestellten Empfängerseite Synchronisierungssignale übertragen, die einem senderseitig, d.h. also im Bereich der linken Zeichnungshälfte nach Fig. 1 dargestellten Synchronisierungssignalgeber 5 entstammen.

Im dargestellten Ausführungsbeispiel werden die auf diese Weise zusammengefaßten Signale oder Signalfolgen einer ersten Signalverarbeitungsvorrichtung zugeführt, beispielsweise einem Mischer 6, der das Signalgemisch mit dem Taktsignal und/oder dem Synchronisierungssignal auf eine einzige Leitung mischt. Da das menschliche Ohr Töne nur bis zu einer Frequenz von etwa 20 kHz wahrnimmt, beträgt die dem Taktgeber 4 entstammende Taktfrequenz im vorliegenden Ausführungsbeispiel ca. 3 MHz, so daß sich bei den zu übertragenden zweiunddreißig Kanälen eine Abtastrate von etwa 50 kHz ergibt, da zwischen den einzelnen Kanälen, die den einzelnen Signalquellen entsprechen, zur Vermeidung von Übersprechen jeweils ein Trennkanal geschaltet ist, also im vorliegenden Ausführungsbeispiel zweiunddreißig Trennkanäle.

Diese zwischen die zweiunddreißig Eingänge, die den zweiunddreißig Signalquellen entsprechen, geschalteten Trennkanäle dienen der Übertragung eines Trennsignals jeweils zwischen zwei von unterschiedlichen Signalquellen stammenden Signalen oder Signalfolgen, wobei hierzu beispielsweise möglich ist, die Trennkanäle an eine erhöhte Spannung, beispielsweise eine Versorgungsspannung zu legen, so daß die Multiplexeinrichtung 3 zwischen den den Signalquellen entstammenden Tonsignalen auf höhere Spannungswerte geht.

Es heißt dies mit anderen Worten, daß immer dann ein erhöhter Spannungswert vorliegt, wenn gerade kein Tonsignal übertragen wird, womit eine genaue Trennung zwischen zwei nacheinander übertragenen Tonsignalen ermöglicht ist, da dazwischen jeweils eine Spannungsspitze gegeben ist. Hierdurch wird in vorteilhafter Weise ein Über- oder Nebensprechen benachbarter Kanäle gedämpft. Es führt dies auch dazu, daß sich nach jeweils zwei Kanälen, nämlich dem eigentlichen Signalkanal und dem nachfolgenden Trennkanal eine erhöhte elektrische Spannung einstellt, die beispielsweise in Form einer Rechteckspannung vorliegen kann. Diese Rechteckspannung bzw. dieses Rechtecksignal wird nach erfolgter Übertragung empfängerseitig dazu verwendet, das vom Taktgeber 4 stammende Taktsignal wiederzugewinnen, indem das übertragene Rechtecksignal gefiltert und seine Frequenz wieder verdoppelt wird.

Das vom Synchronisierungssignalgeber 5 erzeugte Synchronisierungssignal dient dazu, daß empfängerseitig ein übertragenes Signal bzw. eine Signalfolge derjenigen entspricht, wie sie senderseitig auch am entsprechenden Eingang anliegt. Es bedeutet dies mit anderen Worten, daß durch das Synchronisierungssignal sichergestellt wird, daß ein beispielsweise am Eingang Nummer 17 anliegendes Signal bzw. eine dort anliegende Signalfolge nach der Übertragung auch am Ausgang dem Kanal Nummer 17 als dort sich einstellendes Signal bzw. Signalfolge entspricht.

Hierzu wird das Synchronisierungssignal nach oder vor jedem vollständigen Abtastzyklus der Multiplexeinrichtung 3 übertragen. Hierzu wird dieses Synchronisierungssignal im dargestellten Ausführungsbeispiel nach jeweils vierundsechzig Takten erzeugt, da nach diesem Zeitraum ein vollständiger aus den zweiunddreißig Eingangskanälen und den zweiunddreißig Trennkanälen bestehender Abtastzyklus beendet ist. Hierzu kann beispielsweise der Synchronisierungssignalgeber 5 ein nach jedem vierundsechzigsten Takt anliegendes Rechtecksignal erzeugen, das am Anfang eines jeden einzelnen Zyklus übertragen wird. Das Synchronisierungssignal ist gegenüber den anderen Spannungsspitzen erhöht, so daß es sich von den anderen Signalen unterscheidet.

Hierdurch ist in vorteilhafter Weise erreicht, daß nach der Übertragung eine einfache Trennung des übertragenen Signalgemisches, das sich aus dem eigentlichen Ton, bzw. der eigentlichen Tonsignalfolge, dem Taktsignal und dem Synchronisierungssignal zusammensetzt, möglich ist.

Im vorliegenden Ausführungsbeispiel wird das Signalgemisch dann mit Hilfe einer aktiven Treiberschaltung einer schnell modulierbaren Leuchtdiode zugeführt. Es bedeutet dies mit anderen Worten, daß im vorliegenden Ausführungsbeispiel eine analoge Signalübertragung stattfindet derart, daß das in Form einer Schwingung vorliegende Signalgemisch analog übertragen wird, wobei hierzu durch die Leuchtdiode eine Wandlung des analogen Signalgemisches in Lichtschwankungen stattfindet.

Dieses nun in Form von Licht vorliegende Signalgemisch wird in einen als Leitungsanordnung dienenden Lichtwellenleiter 8 eingekoppelt und mit diesem rausch- und störungsfrei sowie mit sehr geringen Dämpfungen zum Empfänger übertragen. Empfängerseitig trifft das modulierte Licht auf eine schnell modulierbare Fotodiode 9 und wird von dieser auf einen nachgeschalteten Filter 10 übertragen.

Dieser Filter 10 dient dazu, das Signalgemisch nach der Übertragung wieder zu trennen. Hierzu weist der Filter 10 einen Komparator auf, der das Synchronisierungssignal herausfiltert.

Es macht dies deutlich, daß nunmehr nach der Übertragung eine Trennung des Signalgemisches in das Synchronisierungssignal und das Taktsignal plus dem eigentlichen Tonsignal bzw. der eigentlichen Tonsignalfolge erfolgt.

Empfängerseitig erfolgt eine Aufteilung des übertragenen eigentlichen Tonsignalgemisches durch eine Multiplexeinrichtung 11, nach der sich die den Eingängen 1 entsprechende Ausgänge 2 einstellen derart, daß jeder Ausgang 2 seinem auf der Eingangsseite zugehörigen Eingang 1 entspricht, so daß jedes an jedem einzelnen der zweiunddreißig Eingänge angelegte Signal nach der Übertragung am entsprechenden Ausgang anliegt. Damit die empfangsseitige Mulitplexeinrichtung 11 im Takt der senderseitigen Mulitplexeinrichtung 3 arbeitet, ist es erforderlich, aus dem nach der Übertragung als Signalgemisch aus Taktsignal plus Tonsignal vorliegende Rechtecksignal das eigentliche Taktsignal zu separieren, damit sichergestellt ist, daß die Multiplexeinrichtungen jeweils zeitgleich und im Takt arbeiten.

Hierzu wird das als Rechtecksignal vorliegende Gemisch aus Taktsignal plus Tonsignal mittels eines Operationsverstärkers von den eigentlichen Tonsignalen befreit und derart nachbearbeitet, daß die senderseitig herbeigeführte Takthalbierung des Taktsignals empfängerseitig kompensiert wird, d.h. das halbierte Taktsignal frequenzmäßig wieder verdoppelt wird. Hierzu ist es beispielsweise möglich, das aus Taktsignal plus Tonsignal bestehende Signalgemisch mittels zweier NOT-Gatter von Tonsignalen zu befreien und das sich so ergebende Taktsignal um 90° bezüglich seiner Phase zu verschieben und Originalsignal und phasenverschobenes Signal einem XOR-Gatter zuzuführen.

Hierbei stellt sich die bereits angesprochene Frequenzverdoppelung ein, die mit der senderseitigen Taktfrequenz synchronisiert werden kann, so daß nach Anlegen dieses Taktsignals durch den Taktgeber 12 an die Multiplexeinrichtung 11 sichergestellt ist, daß die senderseitige und die empfangsseitige Multiplexeinrichtungen taktgleich arbeitet. Wie bereits erwähnt, ist es gleichzeitig erforderlich, daß die senderseitige und die empfangsseitige Multiplexeinrichtung 3 bzw. 11 synchron arbeiten derart, daß sie jeweils nach Vollendung bzw. zu Beginn eines vollständigen Abtastzykluses am ersten Eingang bzw. am ersten Ausgang ihre Arbeit aufnehmen.

Hierzu wird der Multiplexeinrichtung 11 ein von einem Synchronisierungssignalgeber 13 erzeugtes Synchronisierungssignal zugeführt. Es stimmt dieses Synchronisierungssignal mit dem vom Synchronisierungssignalgeber 5 erzeugten Synchronisierungssignal überein.

Funktionstechnisch dient das Synchronisierungssignal dazu, an der Multiplexeinrichtung 3 bzw. 11 einen Reset auszuführen.

Auf diese Weise werden der empfängerseitigen Multiplexeinrichtung 11 alle zu ihrer Arbeit erforderlichen Signale zugeführt, so daß sichergestellt ist, daß die beispielsweise am Kanal Nummer 17 des Eingangs 1 anliegende Tonfolge nach der Übertragung über den Lichtwellenleiter 8 und Verarbeitung durch die Empfangsseite am Ausgangskanal 17 des Ausgangs 2 vorliegt.

Fig. 2 der Zeichnung zeigt die obenstehend diskutierten Signalformen, wobei die oberen zwei Signale der Zeichnung in Fig. 2 dem zu übertragenden bzw. übertragenen Takt bzw. Tonsignal entsprichen, während das dritte Signal der Zeichnung nach Fig. 2 dem zu übertragenden bzw. übertragenen Synchronisierungssignal entspricht.

Das in idealisierter Darstellung dargestellte Rechtecksignal 14 zeigt das Taktsignal vor der Übertragung, während das Signal 15 die Mischung des Taktsignals 14 mit dem Tonsignal darstellt. Wie leicht ersichtlich, weist das Signal 15 nur mehr die Hälfte der Frequenz des Taktsignales 14 auf, wobei dies dadurch zustande kommt, daß zwischen den Tonkanälen und damit den Tonsignalen jeweils Trennkanäle und damit Trennsignale auftreten.
In vorteilhafter Weise werden hierzu die den einzelnen Signalquellen entsprechenden Tonkanäle am Eingang 1 derart auf ein niedriges Potential gelegt, damit das sich somit ergebende Signal 15 unabhängig davon, ob am Eingang 1 Signale oder Signalfolgen anliegen, schwingt, so daß das Taktsignal unabhängig davon übertragen wird, ob an dem der Signalquelle entsprechenden Tonkanal des Eingangs 1 ein Signal oder eine Signalfolge vorliegt. Es heißt dies mit anderen Worten, daß das Taktsignal immer übertragen wird, unabhängig davon, ob mit dem Taktsignal gleichzeitig Tonsignale übertragen werden oder nicht, wodurch mit der gleichfalls ständig durchgeführten Übertragung des Synchronisierungssignal sichergestellt ist, daß die senderseitigen und empfangsseitigen Multiplexeinrichtungen 3, 11 immer im Takt arbeiten.

Wie leicht ersichtlich, ist in Fig. 2 auch die eigentliche Sendeform 16 dargestellt, die einer additiven Überlagerung des Synchronisierungssignals 17 sowie des Signals 15, also der Mischung des Tonsignals und des Taktsignals entspricht.

Die Signalform 18 entspricht dem Taktsignal nach der Übertragung der Sendeform 16, wobei außer der Sendeform 16 bereits die Signalform 18 dadurch hergestellt wurde, daß die sich ergebende Mischung aus übertragenem Tonsignal plus übertragendem Taktsignal um das Tonsignal bereinigt wurde.

Schließlich stellt die Signalform 19 das auf der Empfangsseite erforderliche Taktsignal dar, das weitgehend identisch ist mit der senderseitigen Form 14.

Die Signalform 17 stellt das vom Synchronisierungssignalgeber 5 (Fig. 1) erzeugte ursprüngliche Synchronisierungssignal in Form eines kurzen Peaks dar.

Durch einen Komparator, dessen Referenzspannung oberhalb der Spannung der Trennkanäle, aber unterhalb der Spannung des Synchronisierungssignales liegt, wird aus dem Signalgemisch das Synchronisierungssignal 20 ermittelt.

Das in den Figuren 1 and 2 geteigte system eignet sich zur Signalübertragung überall dort, wo niederfrequente Signale, d.h. beispielsweise Tonsignale und Meßsignale über weite Entfernungen übertragen werden, da der eingesetzte Lichtwellenleiter gegen elektromagnetische Störungen jeder Art unempfindlich ist. So können mit diesen Verfahren beispielsweise überall dort Tonsignale übertragen werden, die von Musikinstrumenten oder Mikrophonen stammen und nachbearbeitet werden müssen. Der Ort dieser Nachbearbeitung kann dabei in vorteilhafter Weise weit entfernt sein von den eigentlichen Signalquellen, da mit dem erfindungsgemäßen Verfahren die zu übertragenden Signale oder Signalfolgen störungsfrei und mit geringer Dämpfung über große Entfernungen übertragen werden können.

## Patentansprüche

1. Ein System, enthaltend Musikinstrumente und/oder Bühnenmikrophone als Signalquellen für Audiosignale, ein Mischpult, eine Verbindung zwischen den Signalquellen auf der einen Seite und dem Mischpult auf der anderen Seite, wobei diese Verbindung zur Übertragung der von den Musikinstrumenten erzeugten Tonfolgen und/oder von von den Mikrophonen aufgenommener menschlicher Stimme dient und wobei diese Verbindung enthält:
eine Multiplexeinrichtung zur Abtastung der einzelnen Signalquellen, eine Einrichtung zur Erzeugung eines Taktsignals, eine Einrichtung zur Erzeugung und Modulation eines Synchronisierungssignals, eine Einrichtung zur Mischung dieser Signale zu einem Signalgemisch sowie eine Einrichtung zur Einkoppelung des Signalgemisches in einen Lichtwellenleiter und einen Lichtwellenleiter.

2. System nach Anspruch 1, **dadurch gekennzeichnet**, dass der Lichtwellenleiter zur Vermeidung des Übersprechens zwischen den Signalen der einzelnen Signalquellen ein Trennsignal überträgt.

3. System nach Anspruch 1 oder 2, **dadurch gekennzeichnet**, dass die Signale der einzelnen Signalquellen, und das Taktsignal eine sich vom Synchronisierungssignal untersch eidende Signalform aufweisen.

4. System nach einem der Ansprüche 1 bis 3, **dadurch gekennzeichnet**, dass der Lichtwellenleiter das Synchronisierungssignal (17) zu Beginn oder am Ende jedes einzelnen oder eines Vielfachen jedes einzelnen Abtastzyklusses überträgt.

5. System nach einem der Ansprüche 1 bis 4, **dadurch gekennzeichnet**, dass das Signalgemisch (16) nach der Übertragung über den Lichtwellenleiter wieder in die den einzelnen Signalquellen entstammenden Signale, das Taktsignal (19) und das Synchronisierungssignal getrennt wird.

6. System nach einem der Ansprüche 1 bis 5, **dadurch gekennzeichnet**, dass die Trennung des Signalgemisches (16) zunächst in Synchronisierungssignal und ein weiteres Signalgemisch aus den einzelnen Signalquellen entstammenden Signalen plus dem Taktsignal erfolgt, wobei dann das weitere Signalgemisch zur Trennung der Signale vom Taktsignal weiterverarbeitet wird.

7. System nach einem der Ansprüche 1 bis 6, **dadurch gekennzeichnet**, dass der Lichtwellenleiter das gebildete Signalgemisch (16) analog oder digital oder die einzelnen Bestandteile des Signalgemisches bestandteilsweise analog oder digital überträgt.

8. System nach einem der Ansprüche 1 bis 7, **dadurch gekennzeichnet**, dass die Verbindung das Signalgemisch (16) über eine Leuchtdiode oder Laserdiode in den Lichtwellenleiter (8) eingekoppelt derart, dass es nach der Übertragung von einem Fotoelement empfangen und der Trennung des Signalgemisches zugeführt wird.

## Claims

1. A system consisting of musical instruments and/or stage microphones as signal sources for audio signals, a mixing desk and a connection to the signal sources on the one side and the mixing desk on the other side, whereby this connection serves to transmit sound sequences generated by the musical instruments and/or the human voice recorded by the microphones, and this connection comprising:
a multiplexer for sampling the individual signal sources, a means for generating a clock signal, a means for generating and modulating a synchronizing signal, a means for mixing these signals to a signal mixture and a means for coupling the signal mixture into a fibre-optic cable, and a fibre-optic cable.

2. System according to claim 1, wherein the fibre-optic cable transmits a separating signal to avoid cross-talking between said signals of the individual signal sources.

3. Signal according to claim 1 or 2, wherein the signals of the individual signal sources and the clock signal have a signal shape, which is different from the synchronizing signal.

4. System according to one of the claims 1 to 3, wherein the fibre-optic cable transmits synchronizing signal (17) at the beginning or at the end of each individual or a multiple of each individual sampling cycle.

5. System according to one of the claims 1 to 4, wherein signal mixture (16) is, after transmission over the fibre-optic cable, again separated into the individual signals emanating from the individual signal sources, the clock signal (19) and the synchronizing signal.

6. System according to one of claims 1 to 5, wherein signal mixture (16) is first separated into the synchronizing signal and a further signal mixture consisting of the individual signals emanating from the individual signal sources, plus the clock signal, this further signal mixture being further processed so that the signals are separated from the clock signal.

7. System according to one of claims 1 to 6, wherein the fibre-optic cable transmits the formed signal mixture (16) in analog or digital form or the individual components of the signal mixture, in part, in analog or digital form.

8. System according to one of claims 1 to 7, wherein signal mixture (16) is coupled into the fibre-optic cable (8) using a light-emitting diode or laser diode so that the signal mixture is received by a photo cell subsequent to transmission and then separated.

## Revendications

1. Système avec instruments de musique et/ou microphones de scène en tant que sources de signaux pour les signaux acoustiques, une table de mixage, une liaison entre les sources de signaux d'un côté et la table de mixage de l'autre, cette liaison servant pour la transmission des séquences de sons des instruments de musique et/ou de la voix humaine enregistrée par les microphones, ladite liaison comportant :
un dispositif de multiplexage pour le balayage des différentes sources de signaux, un dispositif de génération d'un signal de cycle, un dispositif de génération et de modulation d'un signal de synchronisation, un dispositif pour le mélange de ces signaux donnant un signal mixte et un dispositif de couplage du signal mixte sur un conducteur à fibres optiques et un conducteur à fibres optiques.

2. Système selon la revendication 1 caractérisé en ceci que pour prévenir les phénomènes de diaphonie, le conducteur à fibres optiques transmet un signal de séparation entre les signaux des différentes sources de signaux.

3. Système selon les revendications 1 ou 2 caractérisé en ceci que les signaux des différentes sources de signaux et le signal de cycle ont une forme de signal distincte du signal de synchronisation.

4. Système selon l'une des revendications 1 à 3 caractérisé en ceci que le conducteur à fibres optiques transmet le signal de synchronisation (17) au début ou à la fin de chaque cycle ou d'un multiple de cycles individuels.

5. Système selon l'une des revendications 1 à 4 caractérisé en ceci que le signal mixte (16) qu'après la transmission sur le conducteur à fibres optiques, le signal mixte (16) est décomposé en signaux selon les sources de signaux, à savoir le signal de cycle (19) et le signal de synchronisation.

6. Système selon l'une des revendications 1 à 5 caractérisé en ceci que la décomposition du signal mixte (16) est d'abord opérée en signal de synchronisation et un signal mixte comprenant les signaux provenant des différentes sources de signaux plus le signal de cycle, après quoi le nouveau signal mixte est décomposé pour la séparation des signaux par rapport au signal de cycle.

7. Système selon l'une des revendications 1 à 6 caractérisé en ceci que le conducteur à fibres optiques transmet le signal mixte ainsi composé (16) sous forme analogique ou numérique ou les différentes parties du signal mixte sous forme analogique ou numérique pour ces différentes parties.

8. Système selon l'une des revendications 1 à 7 caractérisé en ceci que la liaison du signal mixte (16) est couplée sur le conducteur à fibres optiques (8) par diode luminescente ou diode laser de manière à être reçue après transmission par une photopile et dirigée vers la décomposition du signal mixte.
